# EUROPÄISCHE PATENTSCHRIFT

(11) **EP 3 210 447 B1**
(45) Veröffentlichungstag und Bekanntmachung des Hinweises auf die Patenterteilung: **22.05.2019**
(21) Anmeldenummer: 17156436.2
(22) Anmeldetag: 16.02.2017
(51) Int. Cl.: A01B 63/00, A01B 63/10, A01D 41/14

(54) **SELBSTTÄTIGE ERMITTLUNG VON REGELPARAMETERN EINER ANORDNUNG ZUR ANSTEUERUNG EINES AKTORS ZUR VERSTELLUNG EINES VERSTELLBAREN ELEMENTS EINER LANDWIRTSCHAFTLICHEN ARBEITSMASCHINE**
AUTOMATIC DETERMINATION OF CONTROL PARAMETERS OF AN ASSEMBLY FOR CONTROLLING AN ACTUATOR FOR ADJUSTING AN ADJUSTABLE ELEMENT OF AN AGRICULTURAL WORKING MACHINE
DÉTERMINATION AUTONOME DE PARAMÈTRES DE RÉGLAGE D'UN SYSTÈME DE COMMANDE D'UN ACTIONNEUR DE DÉPLACEMENT D'UN ÉLÉMENT MOBILE D'UNE MACHINE DE TRAVAIL AGRICOLE

(30) Priorität: 25.02.2016 DE 102016202964; 31.01.2017 US 201715420532
(43) Veröffentlichungstag der Anmeldung: 30.08.2017
(73) Patentinhaber: Deere & Company, Moline, IL 61265 (US)
(72) Erfinder: Münch, Philipp, 67663 Kaiserslautern (DE); Jung, Benedikt, 67655 Kaiserslautern (DE); Miller, Byron, Waterloo, IA, 50701 (US)
(74) Vertreter: Holst, Sönke

(56) Entgegenhaltungen:
- EP-A1- 2 591 660
- EP-A1- 2 910 097
- EP-A2- 0 331 893
- US-A- 5 884 204

## Beschreibung

Die Erfindung betrifft eine Anordnung zur Ansteuerung eines Aktors zur Verstellung eines verstellbaren Elements einer landwirtschaftlichen Arbeitsmaschine.

### Technologischer Hintergrund

Landwirtschaftliche Arbeitsmaschinen umfassen in der Regel Elemente, die durch zugeordnete Aktoren gegenüber der Arbeitsmaschine verstellbar, d.h. linear verschiebbar oder verschwenkbar sind. Hierzu zählen im Falle eines Traktors ein an einem Front- oder Heckkraftheber eines Traktors angebrachtes Arbeitsgerät beispielsweise zur Bodenbearbeitung, zum Säen oder zum Ausbringen von Dünger oder anderen Chemikalien, bei einer selbstfahrenden Feldspritze ein höhenverstellbares und/oder um eine sich in Vorwärtsrichtung erstreckenden Achse schwenkbares Spritzgestänge, bei einem Mähdrescher oder Feldhäcksler ein Erntevorsatz, der zur Höhenverstellung um eine horizontale, quer zur Vorwärtsrichtung orientierte Achse (in der Regel die Drehachse einer oberen Schrägfördererwalze bzw. Häckseltrommel) und/oder zur parallelen Ausrichtung an einem Seitenhang um eine sich in Vorwärtsrichtung erstreckende Achse schwenkbar ist, oder ein zur Höhenverstellung seines Auslassendes um eine horizontale Achse höhenverstellbarer und/oder um die Hochachse höhenverstellbarer Auswurfkrümmer eines Feldhäckslers.

Die Sollposition des Aktors und somit des verstellbaren Elements wird durch einen Bediener über eine geeignete Schnittstelle oder durch eine automatische Steuerung vorgegeben. So kann beispielsweise eine bestimmte Höhe des Schneidwerks eines Mähdreschers über dem Boden durch den Bediener vorgegeben werden oder sie wird anhand der aktuellen Position des Mähdreschers aus einer Karte entnommen, in der bei der letzten Ernte verwendete Schneidwerkshöhen eingetragen sind (vgl. DE 44 31 824 C1), oder sie wird anhand vorausschauender Sensoren festgelegt (EP 1 269 823 A1). Die aktuelle Höhe des Schneidwerks über dem Boden wird mittels eines Sensors erfasst und eine Regelung steuert einen Aktor zur Höhenverstellung des Schneidwerks gegenüber dem Mähdrescher im Sinne einer Minimierung des Unterschieds zwischen Sollhöhe und aktueller, sensorisch erfasster Höhe an. Üblicherweise wird hierfür eine Proportionalregelung verwendet.

Bei der Positions- und Lageänderung eines Schneidwerks (z. B. Heben und Senken, laterales Verkippen) entstehen bei der Ansteuerung des Aktors Erregermomente und Erregerkräfte, welche auf die auf großvolumigen Reifen oder gefedert aufgehängten Raupenlaufwerken stehende Erntemaschine übertragen werden. Bedingt durch die großvolumigen Reifen oder die Federung wird hier das System aus Erntemaschine und Schneidwerk zu mechanischen Schwingungen angeregt, welche die Genauigkeit der Höhenlage und der seitlichen Neigung des Schneidwerks relativ zum Boden negativ beeinflussen.

Bei derartigen Proportionalregelungen ist es somit wünschenswert, Regelungsparameter (insbesondere die Regelverstärkung, die vorgibt, in welchem Maß der Aktor auf einen gegebenen Unterschied zwischen Soll- und Istwert reagiert) derart zu wählen, dass das Regelverhalten optimiert wird. So soll die aktuelle Höhe möglichst schnell an die Sollhöhe angepasst werden, ohne dass übermäßige Schwingungen auftreten. Im Stand der Technik wird die Regelverstärkung manuell eingegeben, wozu dem Bediener eine geeignete Schnittstelle zur Verfügung steht, insbesondere ein Drehknopf, oder sie wird anhand eines Erfahrungswerts fest vorgegeben (Y. Xie et al., Fundamental Limits in Combine Harvester Header Height Control, J Dyn Syst Meas Control, May 2013, 0345031-0345038).

Die Eigenschaften der Regelung sind jedoch von etlichen Parametern des Systems (Bodenbeschaffenheit, Bereifung, Korntankfüllstand, Erntevorsatz, Hydrauliksystem, Maschinentyp etc.) abhängig. Bei der im Stand der Technik gebräuchlichen (manuellen) Lösung zur Anpassung der Regelungsparameter an die jeweiligen Gegebenheiten, um einen Kompromiss zwischen Reaktionszeit, Überschwingweite, Stabilität, Robustheit zu erzielen, müsste die Einstellung auf Grund der sich verändernden Gegebenheiten eigentlich regelmäßig angepasst werden. In der Praxis wird jedoch häufig nur einmal eine robuste Einstellung vorgenommen für den ganzen Tag, die dann i.d.R. mit einem starken Leistungsverlust einhergeht. Hierdurch ist teilweise sogar eine Reduktion der Erntegeschwindigkeit notwendig, die die Ernteleistung der Maschine verschlechtert.

Die DE 10 2014 203 005 B3 schlägt vor, das durch eine Vorgabeeinrichtung einem Aktor zugeführte, auf Soll- und Istwerten der Schneidwerkshöhe basierende Stellsignal zur Höhensteuerung eines landwirtschaftlichen Erntevorsatzes mit einem zeitverzögerten Signal zu überlagern, um die oben erwähnten Schwingungen zu vermindern. Die Verstärkung und Zeitverzögerung eines das zeitverzögerte Signal bereitstellenden Verstärkers wird mittels einer Bestimmungseinrichtung ermittelt, die vor Beginn des Erntevorgangs und/oder während des Betriebes den Aktor zur Höhenverstellung des Erntevorsatzes zum Ausfahren veranlasst. Anhand der Signale eines dem Aktor zugeordneten Drucksensors oder eines Trägheitssensors am Schneidwerk ermittelt die Bestimmungseinrichtung die Resonanzfrequenz und Dämpfung des Systems aus Erntevorsatz und Erntemaschine und anhand dessen die Verstärkung und Zeitverzögerung des das zeitverzögerte Signal bereitstellenden Verstärkers. Ein weiterer Verstärker stellt das normale, nicht verzögerte Stellsignal bereit. Dessen Verstärkung kann ebenfalls durch die Bestimmungseinrichtung vorgegeben werden. Hier wird somit nur das dem Aktor zugeführte Stellsignal modifiziert, nicht das von der als Regelung dienenden Vorgabeeinrichtung bereitgestellte Stellsignal.

Die US 7 707 811 B1 beschreibt einen selbstfahrenden Schwadmäher mit einer frontseitigen Mäheinheit und einer dieser zugeordneten, automatischen Auflagedruckregelung. Um das Gewicht der Mäheinheit zu erfassen, das zur korrekten Steuerung des Auflagedrucks benötigt wird, untersucht die Auflagedruckregelung, ob sich die Mäheinheit in einer geeigneten Position befindet, um den Druck im Hubzylinder der Mäheinheit zu erfassen. Als geeignete Position wird angesehen, wenn sich die Mäheinheit in einer relativ großen Höhe über dem Erdboden befindet, z.B. beim Wenden im Vorgewende oder einer Straßenfahrt. Hier wird demnach nur eine statische Größe der Mäheinheit (Gewichtskraft) erfasst. Diese Regelung eignet sich zwar zur Einstellung des Auflagedrucks, aber nicht zur Kontrolle der Höhe eines Erntevorsatzes oder anderen Elements, denn hierfür sind andere Größen, die dessen Bewegungsverhalten charakterisieren, zu ermitteln.

Die EP 0 331 893 A2 beschreibt einen Mähdrescher mit einer Regeleinrichtung zur Kontrolle der Höhe und des Schwenkwinkels des Schneidwerks um eine sich in Vorwärtsrichtung erstreckende Achse. Die tatsächliche Höhe des Schneidwerks über dem Boden wird durch Bodentaster erfasst und ein Mikroprozessor steuert, basierend auf der Differenz zwischen Soll- und Istwert der Schneidwerkshöhe, Aktoren zur Verstellung der erwähnten Winkel an. Der Hysteresebereich und die Totzeit des Soll-Istwertvergleichs der Regelvorrichtung und Veränderungen der dadurch bewirkten Regelcharakteristik werden aus den Reaktionen der Regelvorrichtung abgeleitet, wozu die Periodizität der Stellsignale und ggf. Nähe der Grenzlast herangezogen werden können, und hängen von den Arbeitsverhältnissen ab, wie Fahrgeschwindigkeit, Bodenwellen und Schnitthöhe. Dadurch soll eine Proportional-Differenzial-Integral-Regelcharakteristik mit dynamischer Parameteranpassung erzielt werden. Hier werden demnach Regelparameter in Form von Hysterese und Totzeit (iterativ) verbessert, indem die Stellsignale der Regelvorrichtung erfasst werden. Die Vorgehensweise ist insofern nachteilig, dass einerseits nur Totzeit und Hysterese kontrolliert werden, die nur einen Teil der sinnvollerweise zu kontrollierenden Parameter einer Regeleinrichtung darstellen, und andererseits die hier beschriebene, iterative und ausschließlich auf der Erfassung der Stellsignale der Regeleinrichtung beruhende Vorgehensweise sehr indirekt und zeitverzögert und somit fehlerträchtig arbeitet.

Die EP 2 591 660 A1 beschreibt eine Erntemaschine, an welcher auftretende Schwingungen an Elementen einer Maschine sensorisch erfasst werden und beim Erreichen oder Überschreiten eines anhand der erfassten Schwingungsamplitude abgeleiteten Grenzwerts ein Aktor im Sinne einer Dämpfung der Schwingungen angesteuert wird.

### Aufgabe

Die vorliegende Erfindung hat sich zur Aufgabe gesetzt, eine Anordnung zur Ansteuerung eines Aktors zur Verstellung eines verstellbaren Elements einer landwirtschaftlichen Arbeitsmaschine bereitzustellen, bei der die erwähnten Nachteile ganz oder zumindest teilweise vermieden werden.

### Erfindung

Die vorliegende Erfindung wird durch die Patentansprüche definiert.

Eine Anordnung zur Ansteuerung eines Aktors zur Verstellung eines verstellbaren Elements einer landwirtschaftlichen Arbeitsmaschine umfasst eine Regelung zur Erzeugung von Stellsignalen für das verstellbare Element im Sinne eines Anfahrens einer Sollposition, eine die Stellsignale der Regelung empfangende Kontrollanordnung des mit dem verstellbaren Element gekoppelten Aktors und eine Bestimmungseinrichtung zur Bereitstellung wenigstens eines anhand von erfassten Schwingungseigenschaften des aus dem verstellbaren Element und der Arbeitsmaschine bestehenden Systems bestimmten Parameters. Die Bestimmungseinrichtung ist betreibbar, den wenigstens einen Parameter an aufeinander folgenden Zeitpunkten zu bestimmen und ihn der Regelung zuzuführen. Der Parameter wirkt im Sinne einer Optimierung des Regelverhaltens der Regelung. Die Bestimmungseinrichtung ist betreibbar, den wenigstens einen Parameter im Betrieb oder im Vorgewende bei betriebsmäßig auftretenden, sprunghaften Stellbefehlen zu bestimmen und der Regelung zuzuführen.

Es erfolgt demnach eine automatische Einstellung des Regelungsparameters und dessen regelmäßig bzw. ständige Anpassung, was die Systemleistung und den Fahrerkomfort erheblich steigert. Bei der Bestimmung des Parameters kann derart vorgegangen werden, dass zunächst ein virtuelles, mathematisches Modell des aus dem verstellbaren Element und der Arbeitsmaschine bestehenden Systems definiert wird, das ggf. durch ein Modell für die Dynamik der Kontrollanordnung und des Aktors ergänzt werden kann. Die Bestimmungseinrichtung bestimmt anhand der erfassten Schwingungseigenschaften des aus dem verstellbaren Element und der Arbeitsmaschine bestehenden Systems das Modell bzw. die Modelle charakterisierende Größen. Anhand dieser Größen wird schließlich der wenigstens eine optimierte Parameter für die Regelung festgelegt und dieser zugeführt.

Die Bestimmungseinrichtung kann betreibbar sein, den wenigstens einen Parameter iterativ oder rekursiv zu bestimmen.

Die Bestimmungseinrichtung kann betreibbar sein, den Parameter anhand einer oder mehrerer der folgenden Größen zu ermitteln und/oder den Parameter im Sinne einer Optimierung einer oder mehrerer dieser Größen festzulegen: Überschwingweite, Dämpfung, Anstiegszeit, Beruhigungszeit und/oder Einregelzeit des Elements.

Die Bestimmungseinrichtung kann betreibbar sein, anhand eines oder mehreren der Größen die Parameter der Regelung mithilfe von Einstellregeln oder Tabellen festzulegen.

Die Bestimmungseinrichtung kann betreibbar sein, eine Abweichung zwischen einem idealen Schwingungsverhalten des aus dem verstellbaren Element und der Arbeitsmaschine bestehenden Systems, welches durch ein dynamisches mathematisches Modell beschrieben wird, und dem realen Schwingungsverhalten des Systems zu ermitteln und den sich daraus ergebenden Fehler zur Berechnung eines Parameters im Sinne einer Minimierung der Abweichung des realen Verhaltens vom idealen Verhalten zu verwenden.

Die Bestimmungseinrichtung kann betreibbar sein, anhand des Stellsignals und einer zugehörigen, erfassten Verstellung des verstellbaren Elements wenigstens eine Größe der Regelstrecke, insbesondere einen für die Übertragungsfunktion der Regelstrecke repräsentativen Wert, beispielsweise mittels einer Modellidentifikation, zu bestimmen und anhand dieser Größe einen Reglerentwurf gemäß bekannter regelungstechnischer Methoden durchzuführen und den Parameter anhand des Reglerentwurfs zu bestimmen.

Die Bestimmungseinrichtung kann betreibbar sein, zeitweise Testsignale zu erzeugen und sie den Stellsignalen oder einem der Regelung zugeführten Sollwert für die Position des Elements zu überlagern.

Die Bestimmungseinrichtung kann betreibbar sein, die Reaktion der Kontrollanordnung und des Aktors auf einen sprunghaften Stellbefehl bei der Bestimmung des Parameters zu berücksichtigen, insbesondere basierend auf einer Erfassung der Reaktion des Aktors auf einen sprunghaften Stellbefehl oder anhand einer Abschätzung von Betriebsgrößen der Kontrollanordnung und/oder des Aktors. Hierbei kann es sich insbesondere um die Temperatur des dort verwendeten Hydrauliköls handeln, welche einen Einfluss darauf hat, wie schnell der Aktor auf einen Stellbefehl reagiert. Auf diese Weise wird die Dynamik der aktuellen Regelstrecke mit berücksichtigt.

Das verstellbare Element ist insbesondere ein an einem Front- oder Heckkraftheber eines Traktors angebrachtes Arbeitsgerät (z.B. zur Bodenbearbeitung, zum Säen oder zum Ausbringen von Dünger oder anderen Chemikalien, insbesondere ein höhenverstellbares und/oder um eine sich in Vorwärtsrichtung erstreckenden Achse schwenkbares Spritzgestänge) oder ein höhenverstellbares und/oder um eine sich in Vorwärtsrichtung erstreckende Achse schwenkbares Spritzgestänge einer selbstfahrenden Feldspritze oder ein um eine horizontale, in Vorwärtsrichtung einer Erntemaschine und/oder quer dazu verstellbarer Erntevorsatz oder ein um eine vertikale und/oder horizontale Achse verstellbarer Auswurfkrümmer eines Feldhäckslers.

### Ausführungsbeispiel

In den Zeichnungen sind vier nachfolgend näher beschriebene Ausführungsbeispiele der Erfindung dargestellt, wobei die Bezugszeichen nicht zu einer einschränkenden Auslegung der Patentansprüche herangezogen werden dürfen. Es zeigt:
- Fig. 1: eine schematische seitliche Ansicht eines Arbeitsfahrzeugs mit einem verstellbaren Element,
- Fig. 2: eine schematische Darstellung einer ersten Ausführungsform einer Anordnung zur Ansteuerung eines Aktors zur Verstellung des verstellbaren Elements,
- Fig. 3: ein Beispiel einer vom verstellbaren Element nach Verstellung des Aktors durchgeführten Bewegung mit daran vermerkten Größen, nach denen die Bestimmungseinrichtung die Regelung optimiert,
- Fig. 4: eine schematische Darstellung einer zweiten Ausführungsform einer Anordnung zur Ansteuerung eines Aktors zur Verstellung des verstellbaren Elements,
- Fig. 5: eine schematische Darstellung einer dritten Ausführungsform einer Anordnung zur Ansteuerung eines Aktors zur Verstellung des verstellbaren Elements,
- Fig. 6: einen Generator für Testsignale,
- Fig. 7: eine erste Variante zur Einfügung des Generators der Figur 6 in die Anordnung,
- Fig. 8: eine zweite Variante zur Einfügung des Generators der Figur 6 in die Anordnung,
- Fig. 9: eine schematische seitliche Ansicht eines Arbeitsfahrzeugs mit einem verstellbaren Element, an dem eine vierte Ausführungsform einer Anordnung zur Ansteuerung des Aktors zur Verstellung des verstellbaren Elements Verwendung findet,
- Fig. 10: eine schematische Darstellung einer vierten Ausführungsform einer Anordnung zur Ansteuerung eines Aktors zur Verstellung des verstellbaren Elements, und
- Fig. 11: eine Darstellung des Kurvenverlaufs von einem Sensor zur Erfassung der Position des Schrägförderers aufgenommenen Signals als Funktion der Zeit, das bei der vierten Ausführungsform zur Bestimmung von Parametern der Regelung genutzt wird.

### Arbeitsmaschine

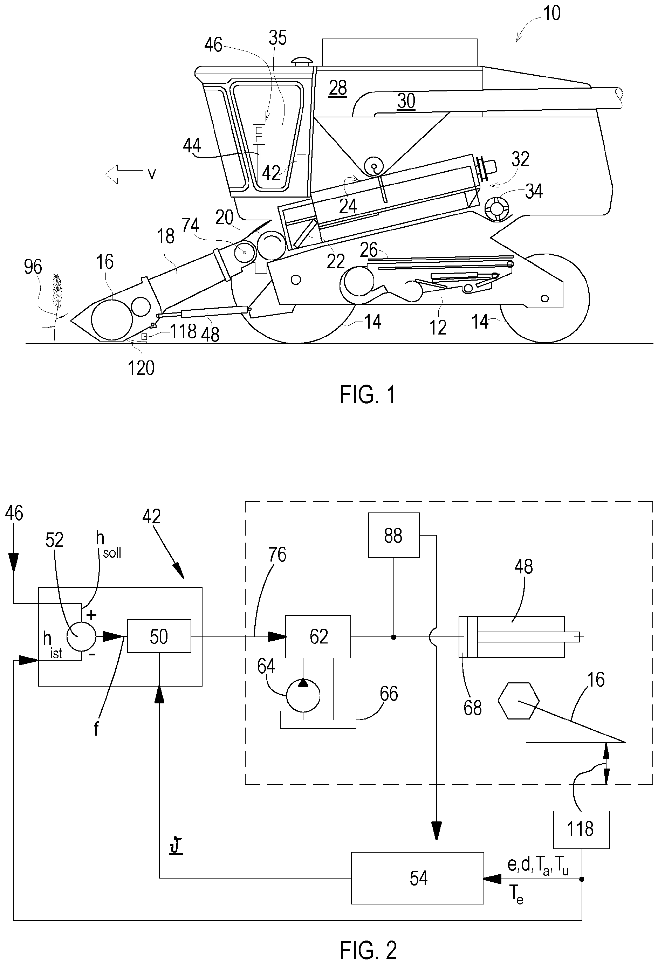

Die Figur 1 zeigt eine selbstfahrende landwirtschaftliche Arbeitsmaschine 10 in Form eines Mähdreschers mit einer tragenden Struktur 12, die mit im Eingriff mit dem Erdboden stehenden Rädern 14 versehen ist. Obwohl die Arbeitsmaschine 10 mit Rädern dargestellt ist, könnte sie auch mit zwei oder vier Gummiraupenlaufwerken versehen sein. Ein Erntevorsatz 16 in Form eines Schneidwerks wird zum Ernten von Erntegut verwendet und führt es im Erntebetrieb einem Schrägförderer 18 zu. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Die dargestellte Gutbearbeitungseinrichtung 24 ist im Mähdrescher axial angeordnet, sie könnte aber auch in anderen Orientierungen relativ zur Längsachse der Arbeitsmaschine 10 angeordnet sein. Auch könnte sie durch ein Tangential- oder Mehrtrommeldreschwerk mit nachfolgenden Strohschüttlern oder Trennrotoren ersetzt werden.

Im Betrieb drischt und trennt die Gutbearbeitungseinrichtung 24 das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden. Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite der Arbeitsmaschine 10 oder führt es einem nicht gezeigten Strohhäcksler zu. Der Betrieb der Arbeitsmaschine 10 wird von einer Bedienerkabine 35 aus gesteuert.

### Höhensteuerung des Elements

Die Höhensteuerung des Erntevorsatzes 16, der in der vorliegenden Ausführungsform als Beispiel für ein verstellbares Element der Arbeitsmaschine 10 dient, erfolgt mittels eines Aktors 48 in Form eines Hydraulikzylinders, welcher den Schrägförderer 18 mit dem daran befestigten Erntevorsatz 16 um die quer zur Vorwärtsrichtung V und horizontal orientierte Drehachse der oberen Umlenkwalze 74 des Schrägförderers 18 verstellt und somit den Abstand zwischen dem Erntevorsatz 16 und dem Erdboden definiert. Der Aktor 48 wird mittels einer Steuerung 42 kontrolliert. Die gewünschte (Soll-) Höhe des Erntevorsatzes 16 wird mittels einer Bedienerschnittstelle 46 mit Tasten vorgegeben, die am oberen Ende eines Fahrhebels 44 angebracht sind, welcher schwenkbar angelenkt ist und zur Vorgabe der Vortriebsgeschwindigkeit der Arbeitsmaschine 10 dient. Ein mit einem Bodenfühler 120 zusammenwirkender Höhensensor 118 erfasst zudem die tatsächliche Höhe des Erntevorsatzes 16 über dem Boden. Dieser Höhensensor 118 könnte auch durch eine berührungslos arbeitende Version ersetzt werden, welche die Höhe des Erntevorsatzes 16 über dem Boden durch Ultraschall, Radar oder Laserlicht erfasst.

Es wird nun auf die Figur 2 verwiesen, in welcher die Steuerung 42 im Detail dargestellt ist. Die Steuerung 42 umfasst eine Regelung 50, die mit der Bedienerschnittstelle 46 und dem Höhensensor 118 verbunden ist. Die Regelung 50 erzeugt während des Betriebs kontinuierlich Stellbefehle, die sie an einen Ausgang 76 abgibt. Diese Stellbefehle sind in an sich bekannter Weise derart bemessen, dass der Erntevorsatz 16 auf einer Höhe über dem Boden geführt wird, die mit der mit der Bedienerschnittstelle 46 vorgegebenen Höhe zumindest näherungsweise übereinstimmt. Die Signale des Höhensensors 118 dienen als Rückkopplungssignale für die tatsächliche Höhe (hᵢₛₜ) und die Signale der Bedienerschnittstelle 46 als Vorgabe für die gewünschte (Soll-) Höhe (hₛₒₗₗ). Ein Subtrahierer 52 berechnet den Unterschied zwischen der Sollhöhe und der tatsächlichen Höhe und gibt diesen Fehler f als Eingangswert an die Regelung 50 weiter. Diese kann als beliebige Regelung ausgeführt sein, z.B. als Proportionalregler oder Proportional-Integralregler oder Proportional-Differenzial-Integralregler oder Proportional-Differenzialregler oder Zustandsregler.

Der Ausgang 76 der Regelung 50 ist mit einer Kontrolleinrichtung 62 verbunden, bei der es sich um eine elektrohydraulische Einheit mit (Proportional- oder pulsweitenkodierten) Ventilen zur Kontrolle der Position des Aktors 48 handelt. Die Kontrolleinrichtung 62 ist mit einer Pumpe 64 zur Druckversorgung, dem Kolbenraum 68 des Aktors 48 und einem hydraulischen Reservoir 66 verbunden, aus dem auch die Pumpe 64 gespeist wird. Die der Kontrolleinrichtung 62 zugeführten Signale am Ausgang 76 der Regelung 50 sind Senk- oder Hebesignale, die von der Kontrolleinrichtung 62 in entsprechende Ansteuersignale ihrer Ventile umgesetzt werden, um den Aktor 48 in Reaktion auf die Signale einzuziehen oder auszustrecken. Die Polarität und Höhe des Signals am Ausgang 84 gibt die Richtung und Geschwindigkeit der Verstellung des Aktors 48 vor und ihre zeitliche Dauer die zeitliche Dauer der Aktivierung des Aktors 48.

Bei einer Positions- und Lageänderung des Erntevorsatzes 16 (z. B. Heben und Senken, in einer anderen Ausführungsform zusätzlich laterales Verkippen), die Folge von Änderungen der Positionssollwerte des Erntevorsatzes 16 und/oder dessen aktueller Höhe sein kann, entstehen bei der in Figur 2 gezeigten Steuerung 42 bei einer Ansteuerung des Aktors 48 Erregermomente und Erregerkräfte, welche auf die auf großvolumigen Reifen stehende Arbeitsmaschine 10 übertragen werden. Bedingt durch die großvolumigen Reifen wird hier das System aus Arbeitsmaschine 10 mit Erntevorsatz 16 zu mechanischen Schwingungen angeregt, welche die Genauigkeit der Höhenlage und der Verkippung des Erntevorsatzes 16 - relativ zum Boden - negativ beeinflussen. Je nach Art der Erregerkräfte und -momente wird die Erntemaschine-Vorsatz-Einheit mit Schwingungen unterschiedlicher Frequenz, Dämpfung und Amplitude angeregt. Im besonderen Maße werden hier auch Resonanzfrequenzen der Erntemaschine-Vorsatz-Einheit angeregt, so dass starke Eigenschwingungen entstehen können. Diese Schwingungen stehen dem Ziel einer konstanten Schnitthöhe des Ernteguts entgegen und verschlechtern das Ergebnis der Vorsatzhöhenregelung.

Im Stand der Technik hat man zur Anpassung des Regelverhaltens der Regelung 50 an die tatsächlichen Gegebenheiten eine Bedienerschnittstelle vorgesehen, mit welcher die Rückkopplungsverstärkung der Regelung 50 (d.h. der Verstärkungsfaktor, mit dem ein Fehler f am Ausgang 76 der als Proportionalregler ausgeführten Regelung 50 verstärkt anliegt) vorgebbar ist. Diese Anpassung wird üblicherweise nur selten durchgeführt, was z.B. nach Änderungen äußerer Bedingungen, wie sich füllendem Korntank 28 oder abweichender Bodenfestigkeit zu nicht optimalem Regelverhalten der Regelung 50 führt, z.B. zu sehr langsamen Reaktionen auf Änderungen der Soll- und/oder Isthöhe bei zu kleiner Rückkopplungsverstärkung oder zum Schwingen bei zu großer Rückkopplungsverstärkung.

### Erste Ausführungsform einer Bestimmungseinrichtung zur Festlegung von Parametern der Regelung

Die Steuerung 42 der Figur 2 umfasst eine Bestimmungseinrichtung 54, der einerseits eine Information über die Stellsignale des Aktors 48 erhält, wozu sie mit einem Drucksensor 88 verbunden ist, der den Druck in der Leitung zwischen der Kontrolleinrichtung 62 und der Kolbenkammer 68 des Aktors 48 erfasst, und der andererseits die mit dem Höhensensor 118 erfasste Höhe zugeführt wird. Die Bestimmungseinrichtung 54 ermittelt anhand der Information über die Stellsignale des Aktors 48 und der mit dem Höhensensor 118 erfassten, zugehörigen Reaktion des Systems aus Arbeitsmaschine 10 und Erntevorsatz 16 das Schwingungsverhalten des Systems aus Arbeitsmaschine 10 und Erntevorsatz 16 beschreibende Größen, beispielsweise die Dämpfung und die Resonanzfrequenz. Anhand dieser Größen legt die Bestimmungseinrichtung 54 Parameter ϑ fest, die sie der Regelung zuführt und die in der Regelung 50 zur Festlegung von Regeleigenschaften verwendet werden. Handelt es sich bei der Regelung 50 beispielsweise um eine Proportionalregelung, kann die Bestimmungseinrichtung 54 die Rückkopplungsverstärkung festlegen. Bei einem Proportional-Integralregler oder Proportional-Differenzial-Integralregler oder Proportional-Differenzialregler können der Proportionalanteil, der Integralanteil und/oder der Differenzialanteil der Regelung 50 durch den Parametersatz ϑ festgelegt werden oder bei einem Zustandsregler die Reglermatrix K. Denkbar wäre auch die Verwendung eines Wurzelortskurvenverfahrens zur Bestimmung des Parametersatzes ϑ, oder dass die Regelung 50 eine Übertragungsfunktion beinhaltet oder realisiert und der Parametersatz ϑ die Koeffizienten der Übertragungsfunktion beinhaltet.

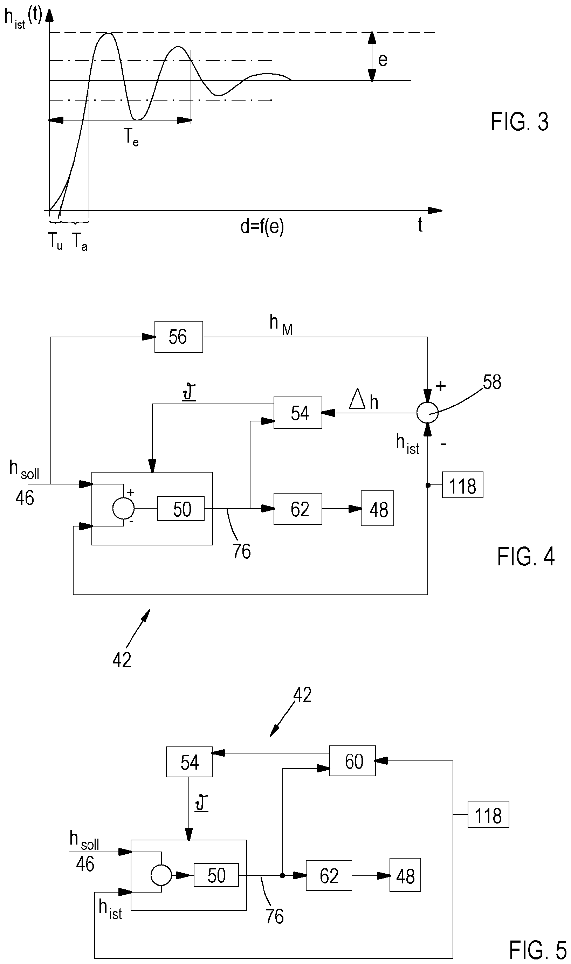

Als das Schwingungsverhalten des Systems aus Arbeitsmaschine 10 und Erntevorsatz 16 beschreibende Größen kann die Bestimmungseinrichtung 54 beispielsweise eine oder mehrere der in der Figur 3 dargestellten Größen der sich als Reaktion auf eine sprunghafte Verstellung des Aktors 48 ergebenden, durch den Höhensensor 118 gemessenen Höhe hᵢₛₜ als Funktion der Zeit t auswerten: Überschwingweite (e), Dämpfung (d), Anstiegszeit (Tₐ), Verzugszeit (Tᵤ) und Einregelzeit (Tₑ) (Zeit bis zum Verbleib in einem Toleranzband) in der Antwort des Systems aus Arbeitsmaschine 10 und Erntevorsatz 16.

Bei der Ermittlung des Parameters ϑ kann die Bestimmungseinrichtung 54 auf eine Tabelle oder festgelegte Einstellregeln zurückgreifen, z.B. Gleichungen. Es wird somit in einer Tabelle nachgesehen, welche Parameter ϑ bei den gemessenen Werten von Überschwingweite (e), Dämpfung (d), Anstiegszeit (Tₐ), Verzugszeit (Tᵤ) und/oder Einregelzeit (Tₑ) an die Regelung 50 zu übergeben sind, oder es werden zur Berechnung der Parameter ϑ geeignete Gleichungen verwendet. Die Parameter werden derart gewählt, dass das Regelverhalten der Regelung 50 optimiert wird. Dabei können eine oder mehrere der erwähnten Größen Überschwingweite (e), Dämpfung (d), Anstiegszeit (Tₐ), Verzugszeit (Tᵤ) und Einregelzeit (Tₑ) optimiert werden.

Bei einer anderen Ausführungsform kann die Bestimmungseinrichtung 54 der Figur 2 bei der Festlegung der Parameter ϑ iterativ oder rekursiv vorgehen, indem sie die Parameter ϑ nach und nach verändert, die Reaktion auf das Regelverhalten der Regelung 50 ermittelt und die Parameter abhängig von der Reaktion im Sinne einer Verbesserung der Reaktion anpasst, insbesondere einer oder mehrerer der erwähnten Größen Überschwingweite (e), Dämpfung (d), Anstiegszeit (Tₐ), Verzugszeit (Tᵤ) und Einregelzeit (Tₑ).

### Zweite Ausführungsform

Bei der in Figur 4 gezeigten, zweiten Ausführungsform der Steuerung 42 sind mit der ersten Ausführungsform übereinstimmende Elemente mit denselben Bezugszeichen gekennzeichnet. Bei dieser Ausführungsform wird das gewünschte, ideale Systemverhalten des Systems aus Arbeitsmaschine 10 und Erntevorsatz 16 durch ein dynamisches mathematisches Modell 56 mit dem Ausgang h_{M} beschrieben. Die Abweichung des idealen Systemverhaltens und des realen Systemverhaltens hᵢₛₜ werden durch einen Subtrahierer 58 miteinander verglichen und der Fehler Δh an die Bestimmungseinrichtung 54 gegeben. Diese berechnet den neuen Parametervektor ϑ der Regelung 50 im Sinne einer Minimierung der Abweichung des realen Verhaltens vom idealen Verhalten.

### Dritte Ausführungsform

Bei der in Figur 5 gezeigten, dritten Ausführungsform der Steuerung 42 sind mit der ersten Ausführungsform übereinstimmende Elemente mit denselben Bezugszeichen gekennzeichnet. Bei dieser Ausführungsform kommt eine Identifikationseinheit 60 zur Anwendung, welche die Übertragungseigenschaften der aus der Kontrolleinheit 62, dem Aktor 48, dem System aus Arbeitsmaschine 10 und Erntevorsatz 16 und dem Höhensensor 118 bestehenden Regelstrecke anhand eines Eingangssignals (das am Ausgang 76 der Regelung 50 anliegt) und dem Ausgangssignal des Höhensensors 118 bestimmt. Mithilfe der durch die Identifikationseinheit 60 bestimmten Übertragungseigenschaften führt die Bestimmungseinrichtung 54 einen Reglerentwurf gemäß bekannter regelungstechnischer Methoden durch. Die Parameter ϑ der Regelung 50 werden also durch einen expliziten Reglerentwurf bestimmt. Hierbei kann ein für die Übertragungsfunktion der Regelstrecke repräsentativer Wert bestimmt, anhand dieses Wertes eine Modellidentifikation erfolgen und anhand der Modellidentifikation ein Reglerentwurf durchgeführt werden, dessen Parameter für den Regler angewandt werden.

### Zeitpunkt der Parameterbereitstellung; Signalgenerator

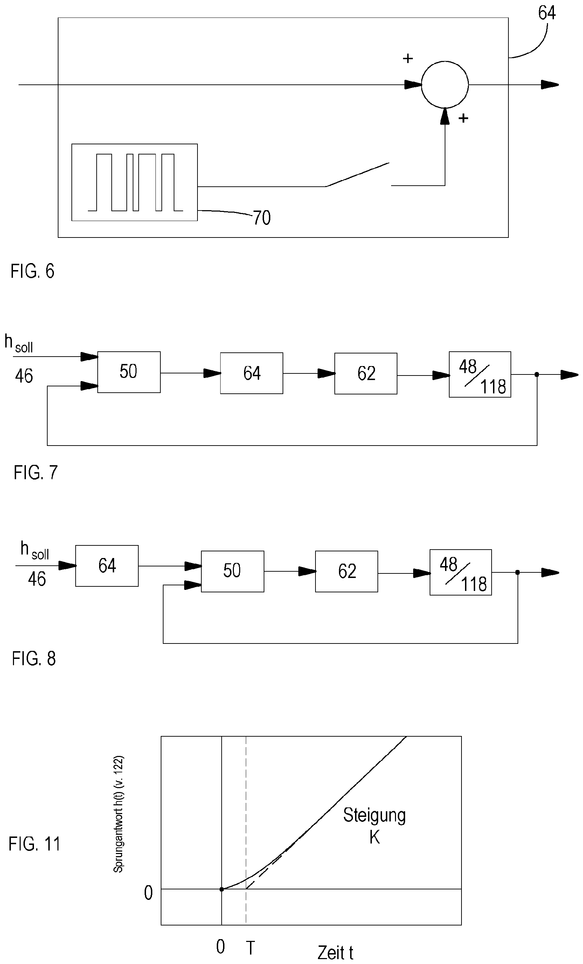

Die beschriebene Anpassung der Parameter ϑ der Regelung erfolgt nicht nur zu Beginn eines Erntevorgangs, sondern in regelmäßigen oder unregelmäßigen Abständen, damit auf sich ändernde Bedingungen reagiert werden kann, z.B. einen sich füllenden Korntank 28 oder andere Bodeneigenschaften. Sie kann prinzipiell im Betrieb, im Vorgewende oder während einer (durch den Bediener oder selbsttätig, z.B. nach Ablauf einer vorbestimmten Zeit initiierten) Kalibrierung erfolgen. Bevorzugt werden jedoch Vorgewende oder Betrieb, da hier regelmäßig eine Anpassung erfolgen kann. Sollten die im Betrieb (sowieso, bei entsprechenden Eingaben des Bedieners oder durch eine automatische Kontrolleinrichtung vorgesehenen) auftretenden Stellsignale am Ausgang 76 für die Bestimmungseinrichtung 54 nicht ausreichen, so können mit einer Einrichtung 64 mit einem Signalgenerator 70 gemäß der Figur 6 zeitweise Testsignale erzeugt werden, die entweder wie in Figur 7 auf die Strecke oder nach Figur 8 auf den Sollwert wirken.

### Vierte Ausführungsform

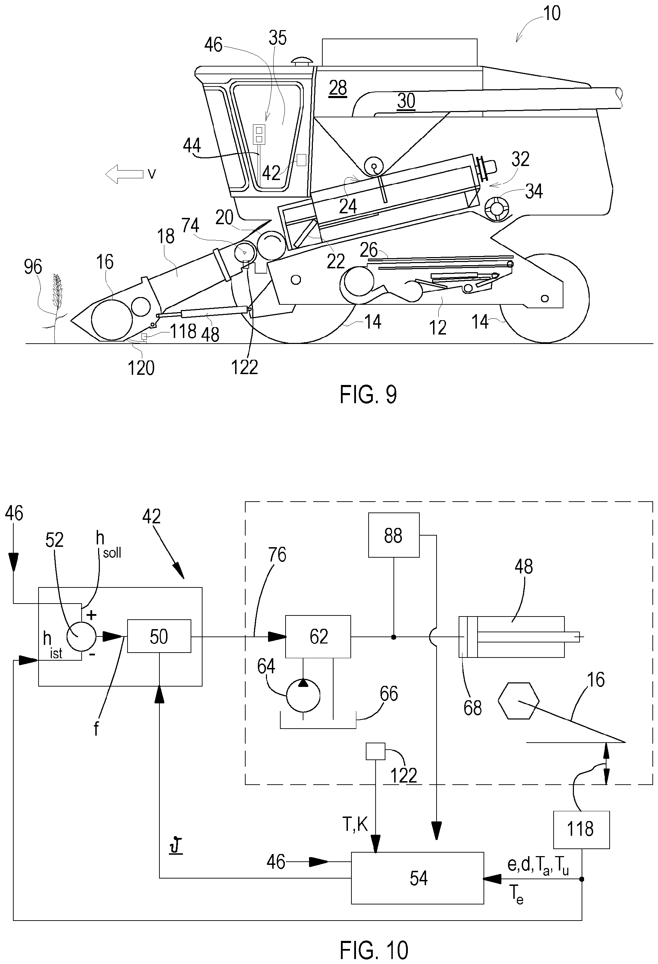

Die in den Figuren 9 und 10 gezeigte, vierte Ausführungsform entspricht der ersten Ausführungsform nach den Figuren 1 und 2, enthält jedoch noch weitere Elemente. Die Drehstellung des Schrägförderers 18 gegenüber dem Fahrgestell 12 der Arbeitsmaschine 10 wird mittels eines Drehwinkelsensors 122 erfasst, dessen Signale der Bestimmungseinrichtung 54 zugeführt werden. Man könnte anstelle der Signale des Drehwinkelsensors 122 auch auf die Signale des Höhensensors 118 zurückgreifen, jedoch sind die Signale des Drehwinkelsensors 122 zuverlässiger, da sie von eventuellen Bodenunebenheiten unabhängig sind.

Die Bestimmungseinrichtung 54 wird auch mit den Signalen der Bedienerschnittstelle 46 beaufschlagt. Während des (Ernte-) Betriebs überwacht die Bestimmungseinrichtung 54 die Signale der Bedienerschnittstelle 46 und führt dann, wenn die Signale der Bedienerschnittstelle 46 (oder von einer automatischen Kontrolleinrichtung, die beispielsweise die Arbeitsmaschine 10 im Vorgewende selbsttätig kontrolliert, vgl. EP 2 020 170 A1) einen sprunghaften Stellbefehl beinhalten, z.B. beim Ausheben des Erntevorsatzes 16 am Beginn des Vorgewendes, beim Absenken des Erntevorsatzes 16 während des Verlassens des Vorgewendes (d.h. beim Einfahren in den Bestand), oder beim Wechsel zwischen einem normalen Erntebetrieb zur Ernte stehenden Ernteguts auf die Ernte von Lagergetreide oder umgekehrt, eine Untersuchung der Reaktion des Schrägförderers 18 auf den erwähnten Stellbefehl durch. Gleichzeitig kann die Ermittlung der bezüglich Figur 2, 4 und 5 diskutierten Parameter ϑ erfolgen.

Die Kontrolleinrichtung 62 und der Aktor 48 werden, wie in der Figur 11 anhand der gestrichelten Kurve dargestellt, zeitlich verzögert auf den sprunghaften Stellbefehl reagieren, d.h. erst nach einer Verzögerungszeit T wird der Drehwinkelsensor 122 eine Reaktion des Schrägförderers 18 erfassen. Anschließend wird sich der Schrägförderer 18 mit einer konstanten Geschwindigkeit, die sich durch eine Steigung K beschreiben lässt, nach oben oder unten drehen. Die durchgezogene Linie der Fig.11 zeigt vereinfacht den zeitlichen Verlauf des Drehwinkelsensorsignals nach einer Sprunganregung. Gestrichelt dargestellt sind Konstruktionslinien, die verdeutlichen wie die Zeit T experimentell ermittelt wird. Die Verzögerungszeit T hängt u.a. von mechanischen Eigenschaften der Kontrolleinrichtung 62, der Pumpe 64 und des Aktors 48 sowie der dazwischen angeordneten Leitungen ab, während die Steigung K von den erwähnten Größen wie auch von der Art des Erntevorsatzes (insbesondere dessen Masse) abhängen kann. Auch die Temperatur des Hydrauliköls kann die Verzögerungszeit T und die Steigung K beeinflussen.

Die Verzögerungszeit T und die Steigung K werden demnach regelmäßig durch die Bestimmungseinrichtung 54 erfasst, nämlich genau dann, wenn von der Bedienerschnittstelle 46 ein sprunghafter Stellbefehl eingeht. Diese beiden Größen repräsentieren die Reaktion der Kontrolleinrichtung 62 und des Aktors 48 auf den Stellbefehl der Bedienerschnittstelle 46. Diese Reaktion beeinflusst letztendlich auch die Bewegung des Schrägförderers 18 und die Höhe des Erntevorsatzes 16 über dem Erdboden.

Bei der vierten Ausführungsform geht die Bestimmungseinrichtung 54 nach alledem davon aus, dass das Hydrauliksystem (Kontrolleinrichtung 62 und Aktor 48) eine bestimmte Reaktion auf einen Sprungbefehl durchführt, die sich im vorliegenden Bespiel durch die Parameter Verzögerungszeit T und Steigung K beschreiben lässt. Die Hydraulik lässt sich somit durch ein Modell beschreiben, das hier beispielsweise als so genanntes IT1-Glied angenähert werden kann. Das System aus Arbeitsmaschine 10, Schrägförderer 18 und Erntevorsatz 16 sowie den elastischen Rädern 14 lässt sich, wie oben in der Beschreibung der ersten bis dritten Ausführungsform dargelegt, durch ein weiteres Modell beschreiben, bei dem es sich beispielsweise um ein so genanntes PT2-Glied handeln kann. Die Bestimmungseinrichtung 54 bestimmt zunächst für beide Modelle anhand von Messungen mittels der Sensoren 118 und 122 diese Modelle charakterisierende Größen, wie oben beschrieben, und anschließend (basierend auf den diese Modelle charakterisierenden Größen) den Parametersatz ϑ derart, dass unter Berücksichtigung der gedachten Reihenschaltung beider Modelle (für das Hydrauliksystem einerseits und das System aus Arbeitsmaschine 10, Schrägförderer 18, Erntevorsatz 16 und den elastischen Rädern 14 andererseits) eine Optimierung des Regelverhaltens der Regelung 50 erfolgt und insbesondere Überschwingungen, Beruhigungszeit und Regelabweichungen in einem erträglichen Maß bleiben. Dieses Maß kann bei allen Ausführungsformen des vorliegenden Dokumentes fest vorgegeben oder durch den Bediener eingebbar sein.

Bei der Ermittlung der Parameter T und K könnte man auch auf eine messtechnische Erfassung der Reaktion des Hydrauliksystems auf den Sprungbefehl verzichten und stattdessen die Temperatur des Hydrauliköls im Hydraulikkreis der Figur 10 erfassen. Anhand der Temperatur des Hydrauliköls lassen sich die Parameter T und K abschätzen, z.B. aus einer Tabelle ablesen. Man könnte auch einfach nur zwei Parametersätze vorsehen, zwischen denen bei einer Umschalttemperatur umgeschaltet wird.

### Weitere Ausführungsmöglichkeiten

Es sind verschiedene Modifikationen der dargestellten Ausführungsformen möglich. So kann ein Aktor (nicht gezeigt) dazu dienen, den Erntevorsatz 16 gegenüber dem Schrägförderer 18 um eine sich in Vorwärtsrichtung V erstreckende Achse zu schwenken, um ihn parallel zum Erdboden auszurichten (s. WO 2008/088916 A2). Dieser Aktor würde durch eine Steuerung, die analog zu der nach Figur 2, 4, 5 oder 10 aufgebaut ist und arbeitet, angesteuert.

Die Erfassung des Schwingverhaltens des Systems aus Erntevorsatz 16 und Arbeitsmaschine 10 muss nicht unbedingt nur auf dem Höhensensor 118 beruhen, sondern es können auch andere Sensoren verwendet werden, die entweder die Bewegung des Erntevorsatzes 16 oder der Arbeitsmaschine 10 erfassen, wie ein Trägheitssensor am Schrägförderer 18, oder das Schwingverhalten beeinflussende Größen erfassen, wie Sensoren zur Erfassung des Korntankinhalts oder des Inhalts eines Kraftstofftanks oder des Reifendrucks. Hierzu wird auf die Offenbarung der DE 10 2014 203 005 B3 verwiesen. Anhand des Schwingverhaltens wird der Parametersatz ϑ für die Regelung 50 festgesetzt. Zwischen dem Ausgang 76 der Regelung 50 und der Kontrollanordnung 62 könnte eine Signalformungsanordnung nach DE 10 2014 203 005 B3 eingefügt werden, um das Schwingverhalten der aus der Kontrolleinheit 62, dem Aktor 48, dem System aus Arbeitsmaschine 10 und Erntevorsatz 16 und dem Höhensensor 118 bestehenden Regelstrecke noch weiter zu verbessern.

Bei einer anderen Ausführungsform ist das verstellbare Element ein an einem Front- oder Heckkraftheber eines Traktors angebrachtes Arbeitsgerät oder ein höhenverstellbares und/oder um eine sich in Vorwärtsrichtung erstreckende Achse schwenkbares Spritzgestänge einer selbstfahrenden Feldspritze oder ein um eine vertikale und/oder horizontale Achse verstellbarer Auswurfkrümmer eines Feldhäckslers.

## Patentansprüche

1. Anordnung zur Ansteuerung eines Aktors (48) zur Verstellung eines verstellbaren Elements (16) einer landwirtschaftlichen Arbeitsmaschine (10), mit:
einer Regelung (50) zur Erzeugung von Stellsignalen für das verstellbare Element (16), die derart bemessen sind, dass die Position des verstellbaren Elements (16) zumindest näherungsweise mit einer Sollposition übereinstimmt,
einer die Stellsignale der Regelung (50) empfangenden Kontrollanordnung (62) des mit dem verstellbaren Element (16) gekoppelten Aktors (48) und
einer Bestimmungseinrichtung (54) zur Bereitstellung wenigstens eines anhand von erfassten Schwingungseigenschaften des aus dem verstellbaren Element (16) und der Arbeitsmaschine (10) bestehenden Systems bestimmten Parameters (ϑ), wobei die Bestimmungseinrichtung (54) betreibbar ist, die Schwingungseigenschaften anhand von Information über die Stellsignale des Aktors (48) und der zugehörigen, mittels eines Sensors erfassten Reaktion des Systems aus der Arbeitsmaschine (10) und dem verstellbaren Elements (16) zu ermitteln, den Parameter (d) derart zu wählen, dass Überschwingungen, Beruhigungszeit und/oder Regelabweichungen in einem fest vorgegebenen oder durch einen Bediener eingebbarem Maß bleiben und der Parameter (d) durch die Bestimmungseinrichtung (54) der Regelung (50) zuführbar und zur Festlegung von Regeleigenschaften der Regelung (50) verwendbar ist,
**dadurch gekennzeichnet, dass** die Bestimmungseinrichtung (54) betreibbar ist, den wenigstens einen Parameter (ϑ) an aufeinander folgenden Zeitpunkten im Betrieb oder im Vorgewende bei betriebsmäßig auftretenden, sprunghaften Stellbefehlen an den Aktor (48) zu bestimmen und der Regelung (50) zuzuführen.

2. Anordnung nach Anspruch 1, wobei die Bestimmungseinrichtung (54) betreibbar ist, den wenigstens einen Parameter (ϑ) iterativ oder rekursiv zu bestimmen.

3. Anordnung nach Anspruch 1 oder 2, wobei die Bestimmungseinrichtung (54) betreibbar ist, den Parameter (ϑ) anhand von einer oder mehreren der folgenden, erfassten Größen des Schwingverhaltens des Elements (16) zu ermitteln: Überschwingweite (e), Dämpfung (d), Anstiegszeit (Tₐ) und/oder Einregelzeit (Tₑ) des Elements (16).

4. Anordnung nach Anspruch 3, wobei die Bestimmungseinrichtung (54) betreibbar ist, anhand eines oder mehreren der erfassten Größen die Parameter des Reglers (50) mithilfe von Einstellregeln oder Tabellen festzulegen.

5. Anordnung nach Anspruch 1, wobei die Bestimmungseinrichtung (54) betreibbar ist, eine Abweichung (Δh) zwischen einem idealen Schwingungsverhalten des aus dem verstellbaren Element (16) und der Arbeitsmaschine (10) bestehenden Systems, welches durch ein dynamisches mathematisches Modell (56) beschrieben wird, und dem realen Schwingungsverhalten des Systems zu ermitteln und den sich daraus ergebenden Fehler zur Berechnung eines Parameters (ϑ) im Sinne einer Minimierung der Abweichung des realen Verhaltens vom idealen Verhalten zu verwenden.

6. Anordnung nach einem der Ansprüche 1 bis 5, wobei die Bestimmungseinrichtung (54) betreibbar ist, anhand des Stellsignals und einer zugehörigen, erfassten Verstellung des verstellbaren Elements (16) wenigstens eine Größe der Regelstrecke, insbesondere einen für die Übertragungsfunktion der Regelstrecke repräsentativen Wert beispielsweise mittels einer Modellidentifikation, zu bestimmen und anhand dieser Größe einen Reglerentwurf gemäß bekannter regelungstechnischer Methoden durchzuführen und den Parameter anhand des Reglerentwurfs zu bestimmen.

7. Anordnung nach einem der Ansprüche 1 bis 6, wobei die Bestimmungseinrichtung (54) betreibbar ist, zeitweise Testsignale zu erzeugen und sie den Stellsignalen oder einem der Regelung (50) zugeführten Sollwert für die Position des Elements (16) zu überlagern.

8. Anordnung nach einem der vorhergehenden Ansprüche, wobei die Bestimmungseinrichtung (54) betreibbar ist, die Reaktion der Kontrollanordnung (62) und des Aktors (48) auf einen sprunghaften Stellbefehl bei der Bestimmung des Parameters (ϑ) zu berücksichtigen, insbesondere basierend auf einer Erfassung der Reaktion des Aktors (48) auf einen sprunghaften Stellbefehl oder anhand einer Abschätzung von Betriebsgrößen der Kontrollanordnung (62) und/oder des Aktors (48), wie der Temperatur des dort verwendeten Hydrauliköls.

9. Landwirtschaftliche Arbeitsmaschine (10), insbesondere Arbeitsfahrzeug, mit einem verstellbaren Element (16) und einer Anordnung nach einem der vorhergehenden Ansprüche.

## Claims

1. Arrangement for actuating an actuator (48) in order to adjust an adjustable element (16) of an agricultural working machine (10), having:
a closed-loop controller (50) for generating actuation signals for the adjustable element (16), which closed-loop controller (50) is dimensioned in such a way that the position of the adjustable element (16) corresponds at least approximately to a target position,
a control arrangement (62), receiving the actuation signals of the closed-loop controller (50), of the actuator (48) which is coupled to the adjustable element (16), and
a determining device (54) for making available at least one parameter (δ) which is determined on the basis of acquired oscillation properties of the system composed of the adjustable element (16) and the working machine (10), wherein the determining device (54) can be operated to determine the oscillation properties on the basis of information about the actuation signals of the actuator (48) and the associated reaction of the system, sensed by means of a sensor, from the working machine (10) and the adjustable element (16), to select the parameter (δ) in such a way that harmonics, settling time and/or control errors remain in a permanently predefined amount or an amount which can be input by an operator, and the parameter (δ) can be fed to the closed-loop controller (50) by the determining device (54) and can be used to define control properties of the closed-loop controller (50),
**characterized in that** the determining device (54) can be operated to determine the at least one parameter (δ) at successive points in time during operation or at the headland when operationally occurring sudden control instructions to the actuator (48) occur and can feed said parameter (δ) to the closed-loop controller (50).

2. Arrangement according to Claim 1, wherein the determining device (54) can be operated to determine the at least one parameter (δ) iteratively or recursively.

3. Arrangement according to Claim 1 or 2, wherein the determining device (54) can be operated to ascertain the parameter (δ) on the basis of one or more of the following acquired variables of the oscillation behaviour of the element (16) : degree of overshoot (e), attenuation (d), rise time (Tₐ) and/or attack time (Tₑ) of the element (16).

4. Arrangement according to Claim 3, wherein the determining device (54) can be operated to define the parameters of the controller (50) on the basis of one or more of the acquired variables, by means of adjustment rules or tables.

5. Arrangement according to Claim 1, wherein the determining device (54) can be operated to ascertain a deviation (Δh) between an ideal oscillation behaviour of the system, composed of the adjustable element (16) and the working machine (10) and which is described by a dynamic mathematical model (56), and the real oscillation behaviour of the system, and to use the resulting error to calculate a parameter (δ) in the sense of minimizing the deviation of the real behaviour from the ideal behaviour.

6. Arrangement according to one of Claims 1 to 5, wherein the determining device (54) can be operated to determine, on the basis of the actuation signal and an associated acquired adjustment of the adjustable element (16), at least one variable of the controlled system, in particular a value which is representative of the transmission function of the controlled system, for example by means of a model identification, and to implement a controller design according to known technical control methods on the basis of this variable and to determine the parameter on the basis of the controller design.

7. Arrangement according to one of Claims 1 to 6, wherein the determining device (54) can be operated to generate test signals temporarily and to superimpose them on the actuation signals or on a target value, fed to the closed-loop controller (50), for the position of the element (16).

8. Arrangement according to one of the preceding claims, wherein the determining device (54) can be operated to take into account the reaction of the control arrangement (62) and of the actuator (48) to a sudden actuation command during the determination of the parameter (δ), in particular on the basis of sensing of the reaction of the actuator (48) to a sudden actuation command or on the basis of an estimation of operating variables of the control arrangement (62) and/or of the actuator (48), such as the temperature of the hydraulic oil used there.

9. Agricultural working machine (10) in particular working vehicle, having an adjustable element (16) and an arrangement according to one of the preceding claims.

## Revendications

1. Système de commande d'un actionneur (48) pour le réglage d'un élément réglable (16) d'une machine de travail agricole (10), comportant :
un dispositif de régulation (50) destiné à générer des signaux de réglage pour l'élément réglable (16), lesquels signaux de réglage sont dimensionnés de manière à ce que la position de l'élément réglable (16) corresponde au moins approximativement à une position de consigne,
un système de contrôle (62) de l'actionneur (48) couplé à l'élément réglable (16), qui reçoit les signaux de réglage du dispositif de régulation (50), et
un dispositif de détermination (54) destiné à fournir au moins un paramètre (θ) déterminé sur la base de propriétés vibratoires détectées du système constitué de l'élément réglable (16) et de la machine de travail (10), dans lequel le dispositif de détermination (54) peut être mis en oeuvre pour déterminer les propriétés vibratoires sur la base d'informations concernant les signaux de réglage de l'actionneur (48) et la réaction associée, détectée au moyen d'un capteur, du système constitué de la machine de travail (10) et de l'élément réglable (16), afin de sélectionner le paramètre (θ) de manière à ce que les oscillations harmoniques, le temps de stabilisation et/ou les écarts de régulation restent dans une plage prédéterminée de manière fixe ou pouvant être saisie par un opérateur, et à ce que le paramètre (θ) puisse être délivré au dispositif de régulation (50) par le dispositif de détermination (54) et utilisé pour la détermination de propriétés de régulation du dispositif de régulation (50),
**caractérisé en ce que** le dispositif de détermination (54) peut être mis en oeuvre pour déterminer ledit au moins un paramètre (θ) à des instants successifs pendant le fonctionnement ou en bordure de champ dans le cas d'ordres de réglage brusques et se produisant en cours de fonctionnement au niveau de l'actionneur (48) et pour le délivrer au dispositif de régulation (50).

2. Système selon la revendication 1, dans lequel le dispositif de détermination (54) peut être mis en oeuvre pour déterminer au moins un paramètre (θ) de manière itérative ou récursive.

3. Système selon la revendication 1 ou 2, dans lequel le dispositif de détermination (54) peut être mis en oeuvre pour déterminer le paramètre (θ) sur la base d'une ou de plusieurs des grandeurs détectées suivantes du comportement vibratoire de l'élément (16) : la largeur des oscillations harmoniques (e), l'amortissement (d), le temps de montée (Tₐ) et/ou le temps de stabilisation (Tₑ) de l'élément (16).

4. Système selon la revendication 3, dans lequel le dispositif de détermination (54) peut être mis en oeuvre pour déterminer les paramètres du régulateur (50) à l'aide de règles ou de tables sur la base d'une ou de plusieurs des grandeurs détectées.

5. Système selon la revendication 1, dans lequel le dispositif de détermination (54) peut être mis en oeuvre pour déterminer un écart (Δh) entre un comportement vibratoire idéal du système constitué de l'élément réglable (16) et de la machine de travail (10), lequel comportement vibratoire est décrit par un modèle mathématique dynamique (56), et le comportement vibratoire réel du système, et pour utiliser l'erreur obtenue afin de calculer un paramètre (θ) au sens d'une minimisation de l'écart entre le comportement réel et le comportement idéal.

6. Système selon l'une des revendications 1 à 5, dans lequel le dispositif de détermination (54) peut être mis en oeuvre pour déterminer, sur la base du signal de réglage et d'un réglage détecté associé de l'élément réglable (16), au moins une grandeur du système régulé, en particulier une valeur représentative de la fonction de transfert du système régulé, par exemple au moyen d'une identification par modèle, et pour réaliser une conception du régulateur conformément à des méthodes connues de la technique de régulation sur la base de ladite grandeur et pour déterminer le paramètre sur la base de la conception du régulateur.

7. Système selon l'une des revendications 1 à 6, dans lequel le dispositif de détermination (54) peut être mis en oeuvre pour générer temporairement des signaux de test et les superposer aux signaux de réglage ou à une valeur de consigne, délivrée au dispositif de régulation (50), de la position de l'élément (16).

8. Système selon l'une des revendications précédentes, dans lequel le dispositif de détermination (54) peut être mis en oeuvre pour tenir compte de la réaction du dispositif de commande (62) et de l'actionneur (48) à un ordre d'actionnement brusque afin de déterminer le paramètre (θ), en particulier sur la base d'une détection de la réaction de l'actionneur (48) à un ordre de réglage brusque ou sur la base d'une estimation de grandeurs de fonctionnement du système de contrôle (62) et/ou de l'actionneur (48), telles que la température de l'huile hydraulique utilisée.

9. Machine de travail agricole (10), en particulier véhicule de travail, comportant un élément réglable (16) et un système selon l'une des revendications précédentes.
